Europäisches Patentamt

(19) European Patent Office

Office européen des brevets

(11) Numéro de publication: **0 114 431**
**B1**

(12) **FASCICULE DE BREVET EUROPEEN**

(45) Date de publication du fascicule du brevet: **12.10.88**

(51) Int. Cl.⁴: **G 01 J 5/52, G 01 M 11/00**

(21) Numéro de dépôt: **83201771.9**

(22) Date de dépôt: **14.12.83**

(54) **Mire thermique pour collimateur de contrôle d'une caméra infrarouge.**

(30) Priorité: **17.12.82 FR 8221188**

(43) Date de publication de la demande:
**01.08.84 Bulletin 84/31**

(45) Mention de la délivrance du brevet:
**12.10.88 Bulletin 88/41**

(84) Etats contractants désignés:
**DE FR GB IT NL**

(56) Documents cités:
**US-A-3 478 211**
**US-A-3 694 624**

**PROCEEDINGS OF THE SPIE, vol. 98,
Assessment of Imaging Systems, novembre
1976, pages 96-104, Londres, GB; A.R.
NEWBERRY et al.: "The laboratory evaluation
of thermal imaging systems"**

**APPLIED OPTICS, vol. 20, no. 12, 15 juin 1981,
pages 2143-2152, Optical Society of America,
New York, US; M.S. SCHOLL et al.: "Infrared
target design: fabrication considerations"**

(73) Titulaire: **TELECOMMUNICATIONS
RADIOELECTRIQUES ET TELEPHONIQUES
T.R.T.
88, rue Brillat Savarin
F-75013 Paris (FR)**
(84) **FR**

(73) Titulaire: **N.V. Philips' Gloeilampenfabrieken
Groenewoudseweg 1
NL-5621 BA Eindhoven (NL)**
(84) **DE GB IT NL**

(72) Inventeur: **Creel, Georges Nelson
SOCIETE CIVILE S. P. I. D. 209 rue de l'Université
F-75007 Paris (FR)**
Inventeur: **Morelle, Claude
SOCIETE CIVILE S. P. I. D. 209 rue de l'Université
F-75007 Paris (FR)**

(74) Mandataire: **Chaffraix, Jean et al
Société Civile S.P.I.D. 209, rue de l'Université
F-75007 Paris (FR)**

(58) References cited:

APPLIED OPTICS, vol. 21, no. 4, 15 février 1982, pages 660-667, Optical Society of America, New York, US; M. SCHOLL: "Thermal considerations in the design of a dynamic IR target"

PROCEEDINGS OF THE SPIE, vol. 274, Assessment of Imaging Systems, 1981, pages 280-286; J.C. FONTANELLA: "Test facility for thermal imaging systems"

## Description

L'invention concerne une mire thermique pour un collimateur, à l'aide de laquelle peut être contrôlé le fonctionnement d'une caméra infrarouge.

Le pouvoir de résolution d'une caméra est déterminé à l'aide d'une mire par détermination du nombre de traits de mire observés par unité de surface. Pour cette détermination, qui s'effectue en laboratoire, la mire est constituée par plusieurs fentes ménagées dans un écran métallique. Les fentes observées présentent une température égale à celle d'un corps noir, placé derrière l'écran et leur écart de température par rapport à l'écran est rigoureusement déterminé. Si l'on désire déterminer les limites de performance de la caméra, ce dispositif conduit à des collimateurs de grandes dimensions.

C'est ainsi que si la caméra thermique est montée par exemple, à bord d'un avion, il n'est pas possible de disposer d'un équipement de mesure volumineux pour effectuer les tests de la chaîne vidéo. Dans ce cas, il faut se limiter à une seule opération de contrôle, qui doit pouvoir être effectuée rapidement et à tout instant, même si l'ambiance observée par la caméra ne présente pas de gradient thermique. Ce cas se présente par exemple en vol au dessus de la mer où l'image est à peu près uniforme s'il ne se présente pas de bateau ou d'autre but dans le champ de visée. Ce contrôle peut être effectué à l'aide d'un collimateur de plus petites dimensions formant une mire thermique à l'infini. La mire est observée par la caméra montée dans une tourelle girostabilisée et orientée par une commande opérateur de façon à rendre son axe parallèle à l'axe du collimateur.

L'invention vise à fournir une mire thermique simple et reproductible permettant d'obtenir une configuration de températures.

La mire thermique du genre mentionné dans le préambule conforme à l'invention est caractérisée en ce qu'elle comporte plusieurs motifs réalisés en un matériau à fort pouvoir thermique émissif sur une face d'un substrat en forme de plaque à faible pouvoir thermique emissif, dont l'autre face est recouverte d'une couche de résistance élevée munie de deux bandes de connexion en un matériau conducteur pour l'amenée de courant électrique à la couche qui, de ce fait, chauffe la mire. Grâce à la différence en emissi-vité du substrat et des motifs, il se produit un gradient de température entre le substrat et les motifs, ce dernier étant plus froid. Les motifs réalisés en un matériau à fort pouvoir thermique émissif peuvent être obtenus par dépôt de ce matériau sur le substrat, par exemple par sérigraphie.

Les avantages d'une telle mire sont les suivantes. La mire peut facilement être réalisée à l'aide de technologies connues et est convenablement reproductible. De plus, les motifs peuvent être modifiés d'une façon simple et un circuit d'alimentation simple est réalisable du fait qu'il n'est pas nécessaire de régler la température.

Il y a lieu de noter que, la grandeur de la différence en température entre le substrat et les motifs étant inconnue, une telle mire ne peut pas être utilisée comme dispositif de mesure mais convient particulièrement à l'opération de contrôle précitée.

La description ci-après, en se référant aux dessins annexés, le tout donné à titre d'exemple non limitatif, fera bien comprendre comment l'invention peut être réalisée.

Les figures 1a et 1b montrent respectivement la vue de la face avant et la vue de la face arrière d'une réalisation de mire thermique conforme à l'invention.

La figure 2 montre schématiquement l'optique du collimateur.

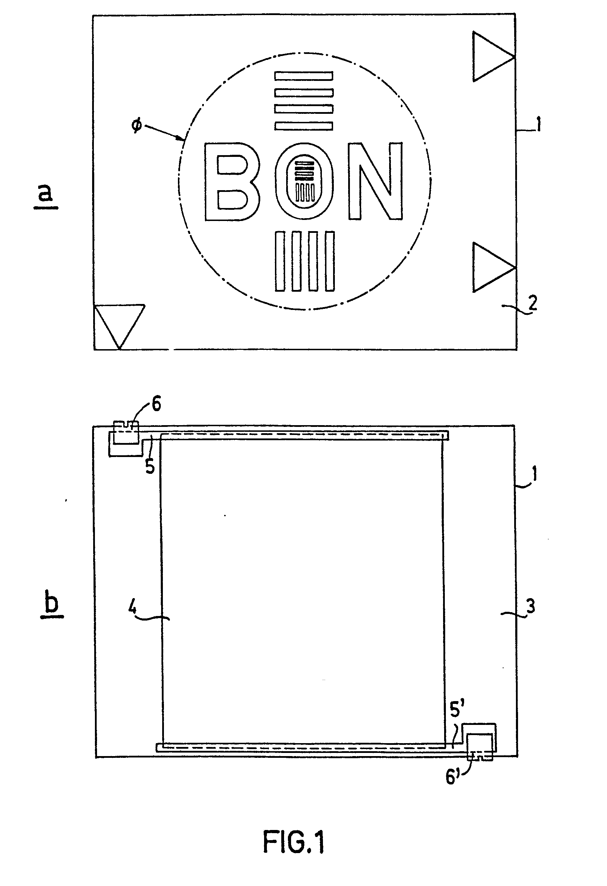

Dans l'exemple de réalisation représenté sur les figures 1a et 1b, le substrat à faible pouvour émissif est constitué par une plaquette rectangulaire d'alumine 1 (à 96% ou à 99%), de dimen-sions de 25,4×20 mm. On peut également utiliser des substrats en ferrite chargés doux ou durs, en oxyde de beryllium ou en tôle émaillée.

La figure 1a est une vue de la face avant 2 de ladite plaquette 1, portant les motifs obtenus au moyen du dépôt d'un matériau à émissivité thermique élevée, tel que l'or, par sérigraphie en couches épaisses. Ces motifs, qui sont appliqués à intérieur d'un cercle d'un diamètre de 15 mm centré au milieu de la plaquette et correspondant au diamètre du faisceau délimité par le collimateur sont constitués par plusieurs traits superposés entremêlés à des lettres. La zone centrale de la mire correspondant aux meilleures performances de la caméra comporte à l'intérieur d'une lettre O quatre traits parallèles disposés horizontalement superposés à quatre autres traits parallèles disposés verticalement. Les traits de la zone centrale de la mire ont les mêmes dimensions (longueur=1,05 mm, largeur=0,15 mm par exem-ple) et sont espacés régulièrement de la largeur d'un trait. La zone périphérique de la mire correspondant en général à de moins bonnes performances de la caméra comporte également des traits parallèles régulièrement espacés de la largeur d'un trait, mais de dimensions supérieures à celles des traits de la zone centrale (longueur=3,5 mm, largeur=0,5 mm par exemple). Ces traits se composent de quatre éléments horizontaux et de quatre éléments verticaux, placés respectivement au-dessus et au-dessous de ladite lettre O, celle-ci étant disposée entre deux lettres B et N. Les petits triangles tracés sur cette face avant sont des repères de positionnement.

Les motifs sérigraphiés peuvent également être constitués par de l'argent, du cuivre, de l'argent-palladium, du platine-argent ou par un matériau de résistance.

La figure 1b est une vue de la face arrière 3 de ladite plaquette 1, recouverte d'une couche 4 présentant une résistivité élevée, qui contient de l'oxyde du ruthénium et qui est appliquée entre deux bandes de connexion connectrices 5 et 5' en or-platine ou en argent-palladium, obtenues également pr sérigraphie. Lesdites bandes de connexion conductrices présentent à une extrémité une zone élargie afin de pouvoir fixer par exemple par soudage les contacts métalliques 6, 6', par exemple en bronze phosphoreux étamé ou en laiton étamé pour l'amenée d'un courant électrique à la couche qui, de ce fait, échauffe la mire. La résistance de la couche est d'environ 700 Ohms et dissipe environ 1 W dans le cas d'un courant de 4 mA.

La différence d'émissivité thermique fait apparaître un écart de température entre le substrat et les motifs, ces derniers étant plus froids. Cet écart subsiste même après plusieurs heures de fonctionnement.

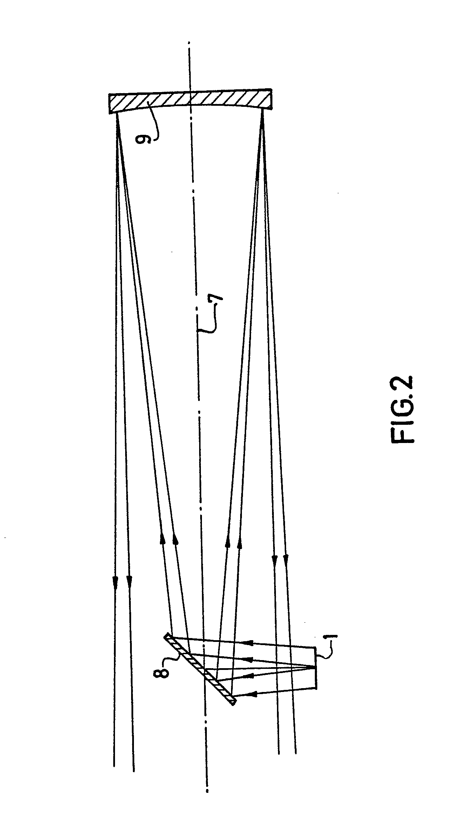

La mire thermique ainsi réalisée est placée dans un collimateur de type Newton par exemple, de 250 mm de distance focale, monté dans un tube de 80 mm de diamètre et équipé d'un hublot en germanium. La figure 2 représente schématiquement l'optique de ce collimateur. La plaquette 1 sur laquelle est réalisée la mire thermique est disposée latéralement et parallèlement à l'axe optique 7 du collimateur. Le rayonnement de la mire tombe sur un miroir plan 8, incliné de 45° sur ledit axe 7 du collimateur et formant la mire au plan focal d'un miroir concave 9, dont l'axe coïncide avec celui du collimateur et qui réfléchit cette image à l'infini.

**Revendications**

1. Mire thermique pour un collimateur à l'aide de laquelle peut être contrôlé le fonctionnement d'une caméra infrarouge, caractérisée en ce qu'elle comporte plusieurs motifs réalisés en un matériau à fort pouvoir thermique émissif sur une face d'un substrat en forme de plaque à faible pouvoir thermique émissif, dont l'autre face est recouverte d'une couche de résistance élevée munie de deux bandes de connexion en un matériau conducteur pour l'amenée de courant électrique à la couche qui, de ce fait, chaffe la mire.

2. Mire thermique selon la revendication 1, caractérisée en ce que les motifs réalisés en un matériau à fort pouvoir thermique émissif peuvent être obtenus par dépôt de ce matériau sur le substrat, par exemple par sérigraphie.

3. Mire thermique selon la revendication 2, caractérisée en ce que le dépôt s'effectue par sérigraphie.

4. Mire thermique selon la revendication 1, 2 ou 3, caractérisée en ce que ledit substrat est constitué par l'un des matériaux du groupe oxyde d'aluminium, ferrites chargés doux ou dur, oxyde beryllium et acier émaillé.

5. Mire thermique selon la revendication 1, 2, 3 ou 4, caractérisée en ce que les motifs sont constitués par un matériau du groupe comprenant l'or, l'argent, le cuivre, un alliage de platine-or, un alliage de platine-argent, un alliage d'argent-palladium ou par un matériau de résistance.

6. Mire thermique selon l'une des revendications 1 à 5, caractérisée en ce que ladite couche à résistance électrique élevée qui est appliquée sur l'autre face du substrat contient de l'oxyde du ruthénium.

7. Mire thermique selon la revendication 6, caractérisée en ce que les bandes de connexion sont en or-plane ou en argent-palladium.

**Patentansprüche**

1. Thermische Kollimator-Testvorlage zur überwachung des Betriebs einer Infrarotkamera, dadurch gekennzeichnet, daß diese Vorlage mehrere Bildmuster enthält, die aus einem Werkstoff mit hoher Wärmeausstrahlungsfähigkeit auf einer Substratfläche in Form einer Platte mit niedriger Wärmeausstrahlungsfähigkeit hergestellt sind, wobei die andere Substratfläche mit einer Schicht mit höherem Widerstandswert bedeckt ist, die mit zwei Verbindungsstreifen aus einem leitenden Werkstoff für die Zufuhr des elektrischen Stroms zur Schicht versehen ist, die auf diese Weise die Testvorlage erwärmt.

2. Testvorlage nach Anspruch 1, dadurch gekennzeichnet, daß die aus einem Werkstoff mit hoher Wärmeausstrahlungsfähigkeit angefertigten Bildmuster durch Ablagerung dieses Werkstoffs auf dem Substrat, beispielsweise durch Siebdruck, erhalten werden können.

3. Testvorlage nach Anspruch 1, dadurch gekennzeichnet, daß die Ablagerung durch Siebdruck erfolgt.

4. Testvorlage nach Anspruch 1, 2 oder 3, dadurch gekennzeichnet, daß das betreffende Substrat aus einem der Werkstoffe der Gruppe von Aluminiumoxid, weich- oder hartmagnetischen Ferriten, Berylliumoxid und emailliertem Stahl besteht.

5. Testvorlage nach Anspruch 1, 2, 3 oder 4, dadurch gekennzeichnet, daß die Bildmuster aus einem Werkstoff der Gruppe bestehend aus Gold, Silber, Kupfer, einer Platin-Gold-Legierung, einer Platin-Silber-Legierung, einer Silber-Palladium-Legierung oder aus einem Widerstandsmaterial bestehen.

6. Testvorlage nach einem der Ansprüche 1 bis 5, dadurch gekennzeichnet, daß die Schicht mit höherem Widerstandswert, die auf der anderen Substratfläche angebracht wird, Rutheniumoxid enthält.

7. Testvorlage nach Anspruch 6, dadurch gekennzeichnet, daß die Verbindungsstreifen aus Gold-Platin oder aus Silber-Palladium bestehen.

**Claims**

1. A thermal collimator target by means of which the operation of an infrared camera can be checked, characterized in that it comprises a number of motifs of a material of a high thermal radiation capacity on one side of a plate-shaped substrate having a low thermal radiation capacity, the other side being covered with a layer having a high electrical resistance which comprises two connection strips of a conductive material for supplying an electric current to the layer which thus heats the target.

2. A thermal target as claimed in Claim 1, characterized in that the motifs made from a material having a high thermal radiation capacity can be obtained by depositing a material on the substrate, for example, by silk-screening.

3. A thermal target as claimed in Claim 2, characterized in that the deposition is carried out by means of silk-screening.

4. A thermal target as claimed in Claim 1, 2 or 3, characterized in that the said substrate consists of one of the materials from the group aluminium oxide, soft or hard filled ferrites, beryllium oxide and enamelled steel.

5. A thermal target as claimed in Claim 1, 2, 3 or 4, characterized in that the motifs consist of a material from the group of gold, silver, copper, an alloy of platinum-gold, an alloy of platinum-silver and an alloy of silver-palladium or a resistance material.

6. A thermal target as claimed in any of the Claims 1 to 5, characterized in that the said layer of high electrical resistance which is provided on the other side of the substrate comprises ruthenium oxide.

7. A thermal target as claimed in Claim 6, characterized in that the connection strips consist of gold-platinum or of silver palladium.

FIG.1

FIG.2

0 114 431